# EUROPEAN PATENT SPECIFICATION

(11) **EP 2 613 941 B1**
(45) Date of publication and mention of the grant of the patent: **30.04.2014**
(21) Application number: 11767796.3
(22) Date of filing: 05.09.2011
(51) Int. Cl.: B41C 1/08, B41J 3/32, B41J 3/38, B41M 3/16, G09B 21/02

(54) **METHOD AND APPARATUS FOR PRODUCING MALE DIES FOR EMBOSSING BRAILLE CHARACTERS AND RELATED MALE DIES**
VERFAHREN UND APPARAT ZUM HERSTELLEN VON PATRIZEN ZUM PRÄGEN VON BRAILLE ZEICHEN UND DAZUGEHÖRIGE PATRIZE
PROCÉDÉ ET APPAREIL POUR PRODUIRE DES MATRICES MÂLES POUR LE GAUFRAGE DE CARACTÈRES BRAILLE ET DES MATRICES MÂLES CORRESPONDANTS

(30) Priority: 30.09.2010 IT MI20101797
(43) Date of publication of application: 17.07.2013
(73) Proprietor: Pro Form S.r.l., 24043 Caravaggio (IT)
(72) Inventor: FOPPAPEDRETTI Franco, I-24043 Caravaggio (IT)
(74) Representative: Pes, Matteo
(86) International application number: PCT/IT2011/000307
(87) International publication number: WO 2012/042548

(56) References cited:
- WO-A1-89/06599
- WO-A2-2008/114018
- DE-U1-202006 002 344
- JP-A- 2004 268 464

## Description

### Background Of The Invention

The present invention concerns a method and the respective apparatus for producing male dies intended for embossing Braille characters, in particular for producing laminar metal male dies intended for embossing Braille characters on paper supports. The invention also concerns a male die for printing Braille characters obtained by the above said method and a printing machine provided with the afore said apparatus.

### Prior Art

Recently, in order to protect blind persons in many countries the packaging of different consumer goods has been obliged to be provided with writings in "Braille" characters. As known, the Braille writing is based on combinations of points in relief compared with the paper support, the blind persons being able to interpret these points by running the fingertips over.

For example, the European directive n. 2001/83/EC provides that all packs of medicines on the market should be provided with Braille writings, readable by blind persons. These tactile writings must meet precise international standards. In other words, the height, the diameter of the points in relief and the curvature of the respective top are subject to standards.

The German utility model DE 202005020833U describes a packaging for consumer goods of various kinds, provided with Braille characters for blind persons. The points in relief are obtained on paper or paperboard of the package, facing outside to be easily touched by users.

One of the most commonly used systems to create Braille writings on paper supports provides screen printing of points in relief. Points are obtained by depositing on the paper support a thick layer of ink that, at a later time, is hardened by drying, for example by irradiation with UV rays. Systems based on screen printing proved to be expensive.

Alternatively to screen printing, one of the most used system is to directly emboss the points in relief onto the product packaging.

In the present description with the term "embossing" is indicated a mechanical process in which the points of the Braille characters are imprinted in relief in a yielding material, such as leather, fabric, paper, plastics, metals, etc...

Normally, the embossing of points in relief, such points defining the characters of Braille alphabet as mentioned, is implemented by compressing the support of a male die and a' counter-male die. The male die, generally made of a hard metallic material, has the points in relief to be embossed and the counter-male die has the corresponding receiving seats of the points in relief. The support is permanently deformed at the portion between each point in relief of the male die and the corresponding receiving seat of the counter-male die.

The male dies and the corresponding counter-male dies can be circular, generally used to emboss supports having the shape of continuous tapes, or flat, normally used to emboss supports in the shape of individual sheets or precut blanks.

Document WO 2008/114018 shows such an embossing apparatus.

The Japanese Patent Application JP 2006235264 describes an apparatus for the embossing of points in relief on tape-shaped paper supports. The apparatus comprises an impression cylinder on whose surface the writings to be embossed on the support in Braille characters are present in relief, and a pushing cylinder arranged in abutment against the impression cylinder. The tape-shaped support, such as a continuous tape of paper or paperboard, is pressed - advanced between the two cylinders rotating in opposite directions and the Braille characters are embossed on the tape-shape support. With this technique it is possible to carry out the embossing directly onto paperboard tapes intended for forming packs of pharmaceutical products.

The embossing of supports made of individual sheets is generally implemented with flat male and counter-male dies arranged to be movable in abutment one to another, for example arranged in a machine for flat die-cutting.

Until a few years ago, in the conventional embossing male dies, both flat and circular, the points in relief defining the Braille characters were obtained with photoengraving techniques, or etching. Disadvantageously these techniques involve high costs and long preparing / executing times.

To overcome these drawbacks alternative technical solutions have been recently proposed, in which the embossing male dies are metal foils applicable interchangeably to the corresponding male die-holding supports. The coupling is typically achieved with glues. The points in relief are substantially conical and are obtained on the metal foil with no expensive photoengraving or etching techniques above described, but they are obtained with cheaper punching or embossing techniques. When it is necessary to replace a male die, for example, because it is worn or to change the Braille text to be embossed on the paper support, it is sufficient to assemble the new male die on the male die-holding support, without changing other parts of the printing machine.

The term "foil" is intended an element having one dimension - the thickness - negligible compared to the other two dimensions - length and width -.

The patent application EP-A-2176071, in the name of the Applicant, describes an apparatus for the production of laminar male dies. A punch is displaced vertically along a first vertical axis, orthogonal relatively to a metal foil, and horizontally along a second axis, transversal relatively to the same metal foil. The metal foil is in its turn moving along a third axis, orthogonal to the first and second axis, its movement being intermittent and synchronized with the movement of the punch. The punch impacts against the upper surface of the foil and deforms it locally, embossing the points in relief on its lower surface, in the expected positions. The embossed foil is cut into several sheets, each of which constituting a male die for embossing Braille characters. The thus obtained laminar male die can be applied to a flat male die-holding support; the male die can be folded (bent) for applying to a cylindrical male die-holding support.

The patent application EP-A-1932657 describes an apparatus provided with laminar curved male dies, mounted interchangeably on corresponding embossing cylinders.

A drawback of the laminar interchangeable male dies can be found during the respective use, especially for large productions.

The replacement of a male die involves the stop of the printing process and the stand-by; this stop is much longer the greater the time required to complete the assembling of the new male die on its support and the respective alignment relatively to the counter-male die is. The alignment is a tricky operation requiring time and expertise by the operator. Normally, the operator manually locates the male die on the respective support (or on a pertinax base fixed to the support), by means of adhesive substances, and it carries out a first alignment relatively the counter-male die with the aid of registers on the male die-holding support. The registers are mostly visual marks on the male die-holding support. The operator then performs one or more printed tests and, based on the geometric characteristics of Braille characters obtained on printed support, it changes the alignment of the male die on the respective support to correct any minimal misalignments relatively to the counter-male die. Obviously the alignment precision thus obtained depends strongly on the operator skill.

An imprecise alignment of the male die relative to its support, and thus also with respect to the counter-male die, can easily lead to a low quality of the embossing of Braille characters when restarting the machine, or even it may result in failure to meet standards. In addition, a male die positioned incorrectly can cause unwanted vibrations in the interaction with the paper support to be embossed and the corresponding counter-male die. Last but not least, an imprecise positioning of the male die relatively to the counter-male die, even of a few millimeter tenths, can easily lead to premature wear of these elements themselves and consequent further production stops for the male die and / or counter-male die replacement.

It has to be considered that in many applications a plurality of male dies must be applied simultaneously on the same male die-holding support, the alignment must be precise for each positioned male die and this further complicates the preparations for the production itself. For example, if the male dies to be placed on the male die-holding support are forty, the alignment must be carried out for all the forty male dies. Possible operator corrections onto some male dies would reflect on all the other male dies, because each male die must be aligned with the support and also in relation to adjacent male dies. It is evident that the male die alignment can be particularly complicated and times for the respective conclusion are quite unpredictable, but long.

Another drawback, although less felt, is the fact that the male die cah be slightly misaligned with respect to the corresponding male die-holding support, and then respect to the counter-male die, even during the embossing process (Braille printing), due to vibrations these elements are subjected to.

The described drawbacks are felt to a lesser extent in machines provided with circular male and counter-male dies, as the male die curvature aids to maintain the centering, but they can have a significant impact on machines provided with flat male and counter-male dies.

### Summary Of The Invention

The object of the present invention is to provide a method for producing male dies for embossing Braille characters solving the drawbacks of common solutions.

In particular, it is an object of the present invention to provide a method for manufacturing male dies for embossing Braille characters that is easy and economic to implement, allowing to obtain laminar male dies to be aligned easily relatively to the respective male die-holding support with the highest precision.

It is a further object of the present invention to provide a laminar male die for embossing Braille characters that is easy to align with the highest precision relatively to the corresponding counter-male die and even to other male dies of the same type located on the respective male die-holding support.

The present invention relates therefore, in its first aspect, to a method according to claim 1 for manufacturing an interchangeable laminar male die for embossing Braille characters on yielding supports.

Particularly, the method according to the present invention comprises the steps of:
a) providing a metal foil provided with an upper face and a lower face;
b) locally deforming said metal foil to obtain a plurality of first points in relief on one from the upper face and the lower face of the foil, said first points defining one or more characters in Braille alphabet;
c) locally deforming said metal foil to obtain at least two seconds points in relief on the other from the upper face and the lower face of the foil, said second points in relief being aligned with corresponding receiving seats of an outer male die-holding supports.

With the term interchangeable it is intended to point out that the male die is obtained as a metal foil able to be applied to the respective male die-holding support and replaced, if necessary, based on production needs, in the aforesaid methods.

With the term "yielding support" it is intended generically to indicate any material suitable to be embossed with' points in relief defining the Braille alphabet. Supports of this type are, for example, paper, paperboard, hide, leather, some plastics, thin metallic sheets, etc...

Advantageously, the method according to the present invention provides the step of c) obtaining at least two points of alignment, in relief, at the male die face opposite to the face on which the points, that will emboss tactile Braille writings on the support to be printed, are obtained. The alignment points are not intended for embossing the yielding support, but they serve to achieve a rapid and precise alignment of the metal foil, that is the male die, relatively to the corresponding male die-holding support. In addition, the alignment points aid to hold the male die in the correct position during use too, when it is subjected to vibrations. The coupling between the alignment points and respective receiving seats restrict or impede the rotations and misalignments of the male die with respect to the respective support.

Thanks to the present invention, the average times needed to align a male die with respect to respective support, and then to the counter-male die, can be reduced drastically, up to 1/3 of the whole duration usually required by traditional systems.

On the male die-holding support at least a corresponding number of seats receiving the aligned points of relief is arranged. The operator for the male die positioning on respective support therefore takes advantage. The precise alignment of the male die relatively to the counter-male die is obtained simply by inserting the alignment points of the male die into the corresponding receiving seats of the male die-holding support, in their turn obtained in optimal and precise alignment with respect to the male die.

A male die-holding support expressly designed with the afore described receiving seats falls within the scope of the present invention and it is the subject of claim 13.

Advantageously each alignment point is inserted in the corresponding receiving seat with a male-female coupling of a substantially conical type, aiding the self-centering of the alignment points with respect to the receiving seats and, therefore, it aids the exact alignment preservation of the male die during the embossing of the yielding supports, when the vibrations may act to misalign the male die relatively to the counter-male die.

The steps b) and c) of the method according to the present invention may be implemented in chronological order, with step b) preceding the step c), or vice versa, or substantially simultaneously.

Preferably the metal foil is rectangular and the second points in relief, that is the alignment points, are at least three, each one obtained at a corner of the foil.

Preferably, steps b) and c) are implemented by means of one or more movable punches in abutment against the surface of metal foil, alternately along a direction perpendicular to both upper and lower faces.

Generally, the punch is provided with a single tip intended for interacting with the metal foil. Alternatively, the punch can be provided with several side by side and integral tips, for example, a single punch can be formed so as to emboss at the same time the foil with its nine tips identifying a particular character in Braille alphabet. In other words, the punch can itself be formed as a letter in Braille alphabet.

Preferably the first and second alignment points in relief have the same geometrical characteristics. Alternatively, the second points in relief have a substantially different diameter and / or height, for example greater, than the diameter / height of the first points in relief.

The present invention relates therefore, in its third aspect, to a male die according to claim 6 for embossing Braille characters on yielding supports.

In particular, the male die includes a plurality of first points in relief, projecting from a first face of the laminar male die and defining one or more marks in Braille alphabet, and it is characterized by comprising at least two second points in relief, projecting from the second face of the laminar male die opposite said first face, wherein said second points in relief can be inserted into corresponding receiving seats of an outer support of the laminar male die.

In other words, the first points in relief and the second points in relief extend in the direction opposite to the metal foil forming the body of the male die.

Preferably the male die comprises one or more of the following characteristics:
d) the foil that forms the body of the mail die is rectangular;
e) there are at least three second points in relief and they define two perpendicular axes parallel to the foil;
f) the first points in relief and the second points in relief have the same geometric characteristics or else the second points in relief have a different diameter and / or height with respect to the first points in relief;
g) each of the second point in relief has a substantially conical extension;
h) the plate is flat or curved.

The foil, initially flat, can be bent after being embossed with points in relief for the use with circular male die-holding supports.

In accordance with the present invention, the male die-holding support comprises at least two receiving seats of the second points in relief of the male die. These seats have a substantially complementary shape relatively to the shape of points in relief so as to realize a conical coupling therewith having the above described characteristics.

It is a further object of the present invention to provide an apparatus for producing laminar male dies of the afore said type.

The present invention relates therefore, in its fourth aspect, to a apparatus according to claim 8 for manufacturing a laminar male die to be used for embossing Braille characters on yielding supports.

In particular, the apparatus comprises:
i) a device for advancing a foil along a first direction,
1) a first punch able to move perpendicularly and parallel with respect to the foil, along a second direction and a third direction, respectively, to imprint first points in relief at a first face of the foil,
characterized by further comprising,
1) a second punch able to move perpendicularly with respect to the foil, along a fourth direction parallel to the second direction, to imprint second points in relief at the second face of the foil opposite the first face, or alternatively,
m) means for turning over the foil with respect to said first punch to allow the latter to also imprint second points in relief at the second face of the foil.

Advantageously, the apparatus allows to imprint points in relief on both sides of the foil, that forms the body of the mail die. This is achieved by providing the apparatus of a second punch (in addition to the punch imprinting points in relief according to the Braille characters), or arranging a foil repositioning station that rotates the foil itself with respect to the first punch.

For example, once all the first points in relief have been embossed on the first face of the foil, the latter it is turned over (180°) and subjected again to the first punch.

The apparatus is simple to implement because it comprises already widely used elements for the embossing of the laminar male dies. In addition the apparatus can be also installed on existing machines, that can be modified by the addition of a second punch or a turning over unit for the foil or the first punch.

Preferably the advancing movement of the foil is translating, intermittent, and synchronized with the movement of the first punch and / or second punch. The foil is stopped when the first punch and / or the second punch go(es) in abutment against the foil surface to imprint points in relief.

Preferably the first direction lies in a horizontal working plane, the second direction is orthogonal to the working plane and the third direction is parallel to the working plane.

In its fifth aspect the invention concerns a machine for printing Braille characters on yielding supports, such as paper, cardboard, paperboard, hide, plastic, etc.., including the described above apparatus.

### Brief Description Of The Figures

Further characteristics and advantages of the present invention will be more evident from the following description of its preferred embodiment, made herein below, for illustration purposes only and without limitation, with reference to the attached drawings. In such drawings:
- figure 1 is a top perspective view of a laminar male die according to the present invention intended for embossing Braille characters on yielding supports;
- figure 2 is a bottom perspective view of the male die shown in figure 1;
- figure 3 is a side view of the male die shown in figure 1;
- figure 4 is a side view of the male die shown in figure 1 and a corresponding counter-male die;
- figure 5 is a top perspective view of an apparatus according to the present invention;
- figure 6 is a partially sectioned plan view of the apparatus shown in figure 5;
- figure 7 is a front view of a first detail of the apparatus shown in figure 5;
- figure 8 is a cross section view of a second detail of the apparatus shown in figure 5;
- figure 9 is a cross section view of a third detail of the apparatus shown in figure 5;
- figure 10 is a cross section and partial view of the detail shown in figure 9.

### Detailed Description Of A Preferred Embodiment Of The Invention

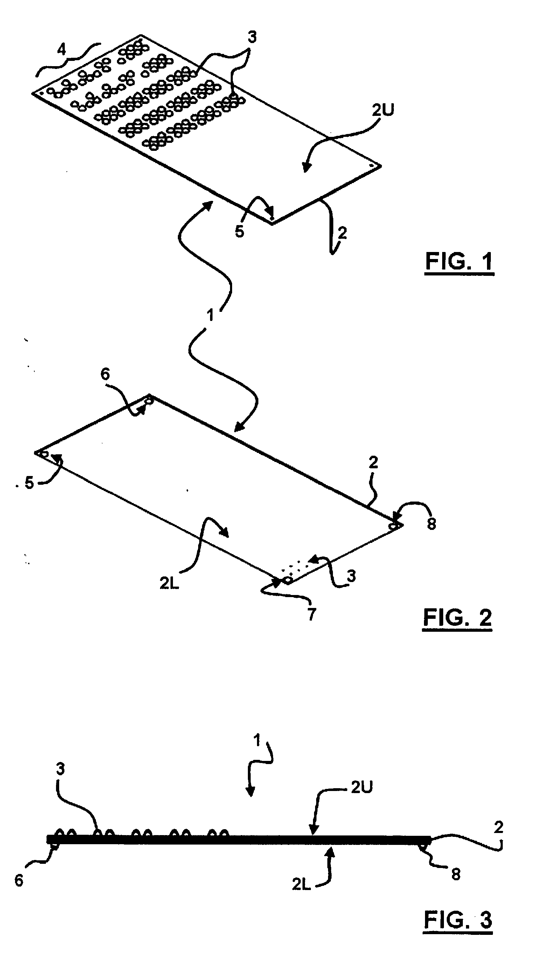

With reference to the attached figures, and in particular with reference to Figures 1-3, with the reference number **1** is generally indicated a male die according to the present invention for embossing Braille characters on yielding supports such as, for example, paper, cardboard, paperboard, hide, fabrics, plastics, wood, etc... In particular, the male die **1** is particularly suitable for embossing Braille characters on paperboard precut blanks intended for packaging of drugs.

The body **2** of the male die **1** is a metal foil, such as a steel foil whose thickness is negligible compared to its length and width. The male die 1 is of exchangeable type, that is intended for being coupled to a male die-holding support of a machine for embossing the above described supports.

The male die **1** comprises a plurality of points in relief 3 obtained on one of the two faces of the laminar body **2**, for example the upper face **2U**. Each point in relief 3 has such geometric characteristics to imprint corresponding Braille points on the embossed support according to the requirements of the above mentioned standards. The points in relief **3** are arranged on the surface of the male die **1** to define corresponding characters or symbols **4** in Braille alphabet.

Preferably the points in relief **3** are obtained by punching or embossing techniques.

Advantageously, the male die **1** according to the present invention includes at least two points in relief **5**, **6** projecting on the other side **2L** of the laminar body **2** of the male die, i.e. the lower face **2L** opposite to the upper face **2U**. Preferably, as in the embodiment shown in Figures 1-3, the points in relief obtained on the lower surface **2L** are at least three, and precisely four **5-8**, each positioned at one corner of the laminar body 2. Alternatively, the points in relief **5**, **6** and possibly **7**, **8** are located in any portion of the face **2L** of the male die **1**, provided that they do not interfere with the points in relief **3**.

The points in relief **5-8** are not used to emboss corresponding points in relief in the supports to be printed with Braille characters, but instead have the function of simplifying and optimizing the alignment of the male die **1** with respect to its male die-holding support, in a printing machine, and thus indirectly also with respect to the counter-male die.

Preferably the line passing through the points in relief **5** and **6** and the line passing through the points in relief **5** and **7** are orthogonal.

Preferably the points in relief **3** and **5** - **8** have identical geometrical characteristics and they are substantially conical. Alternatively, the points in relief **5**-**8** have diameters and / or height (or depth) greater than the points in relief **3**.

The male die **1** shown in attached Figures is flat. However, it can be bent for mounting on cylindrical male die-holding supports.

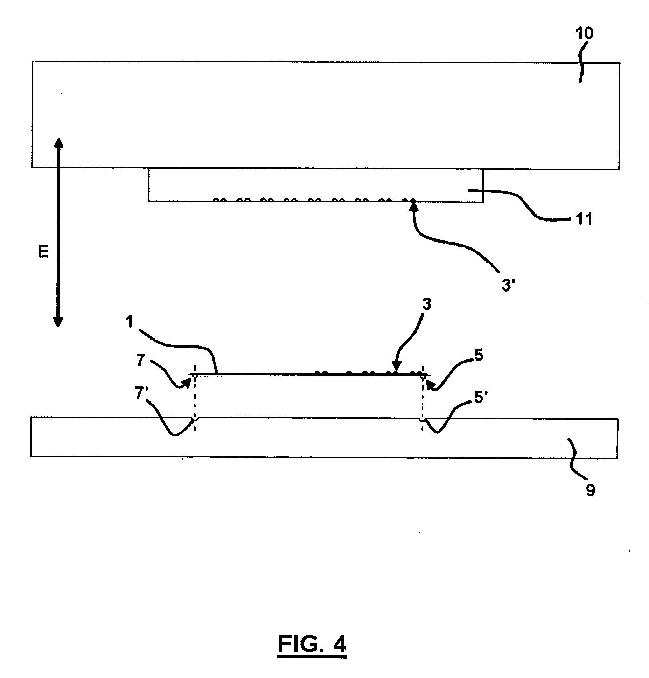

Figure 4 shows a machine for printing, or embossing, Braille characters on paperboard and it is useful for understanding the advantages of the present invention. The machine structure is substantially equivalent to that of a machine for flat die-cutting, with the difference that instead of threads for cutting or creasing the paperboard there are the male die **1** and the corresponding counter-male die **11**.

The counter-male die **11** is attached to a upper supporting plate **10** movable reciprocally relatively to a stationary lower supporting plate **9**, as indicated by the double arrow **E**. The motion extent is such to bring the counter-male die **11** in abutment or almost in abutment against the male die **1** attached to the lower supporting plate **9**.

The counter-male die **11** is provided with a plurality of seats **3'** for receiving the points in relief **3** of the male die **1**. The male die **1** is shown separated from the supporting plate **9** for more clarity, but in use it is attached to the supporting plate **9**, for example by means of a double-sided tape or glues, so that the points in relief **3** are still facing the counter-male die **11**.

The lower supporting plate **9** is provided with seats **5'-8'** for receiving the points in relief **5-8** of the male die. Advantageously the correct alignment between the points in relief **3** of the male die **1** and the receiving seats **3'** of the counter-male die **11** is aided, if not guaranteed, by the coupling between the points in relief **5-8** obtained on the lower face of the male die **1** and the corresponding receiving seats **5'-8'** obtained into the supporting plate **9**.

The receiving seats **5'-8'** are obtained in the supporting plate **9**, with punching or machining techniques, in predetermined positions, with the utmost precision. The coupling between the points in relief **5-8** of the male die **1** and the receiving seats **5'-8'** is preferably conical, and therefore substantially self-centering.

Whenever the replacement of the male die **1** with a new male die becomes necessary, the alignment of the new male die with respect to the supporting plate **9** is obtained automatically attaching the new male die **1** on the upper surface of the plate **9**, taking care to include the points in relief **5-8** in the receiving seats **5'-8'**.

This feature allows to simplify the procedure for replacing the male die **1** and to minimize the downtime duration, to the benefit of production.

Moreover, the high alignment precision that can be obtained as above described allows to maintain the quality standards over time required by the regulations regarding the embossing of Braille characters. In fact the substantially conical coupling between the points in relief **5-8** and the receiving seats **5'-8'** is firm also during the support embossing, when vibrations are generated.

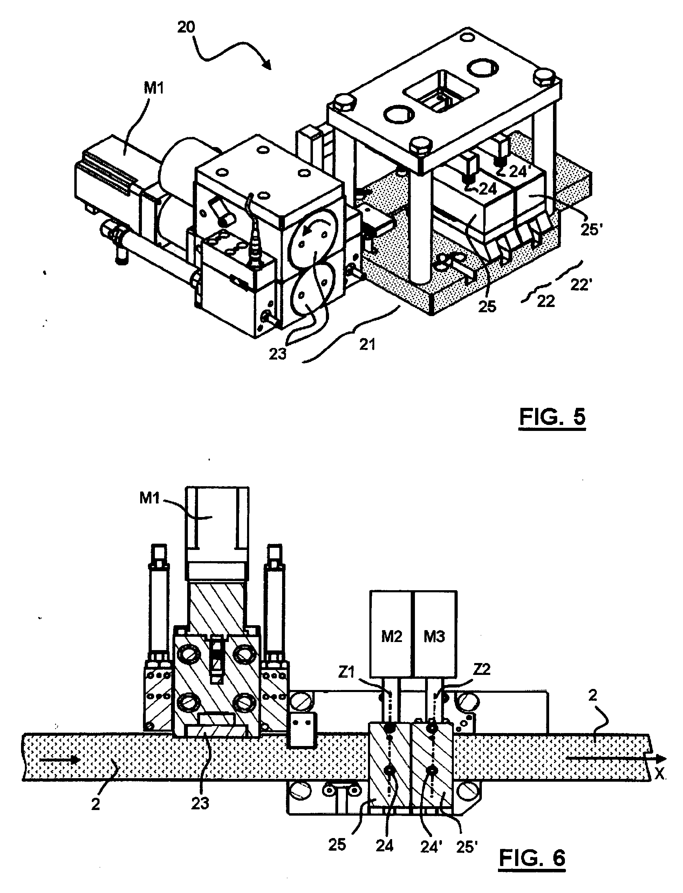

Figures 5 and 6 show in perspective and from top, an apparatus **20**, partially sectioned, according to the present invention for the production of the above described male die **1**. The apparatus **20** can be mounted in an automatic machine for embossing Braille characters on precut blanks, such as paperboard.

Generally, the apparatus **20** comprises a device **21** for advancing a foil **2** along a first direction X lying in a working plane and a first punch **24**. The advancing device **21** comprises two wheels **23** operable rotationally by a motor **M1** around corresponding axes parallel to each other; the foil **2**, that will form the body of the male die **1** is pressed between the wheels **23**, driven rotationally in an opposite way one each other. Convenient sensors, such as active optical encoders on the shaft of at least one of the wheels **23**, provide the measure of the advancement given to the foil **2**. In the solution shown in the figures, the foil **2** is moving in the **X** direction in a horizontal working plane.

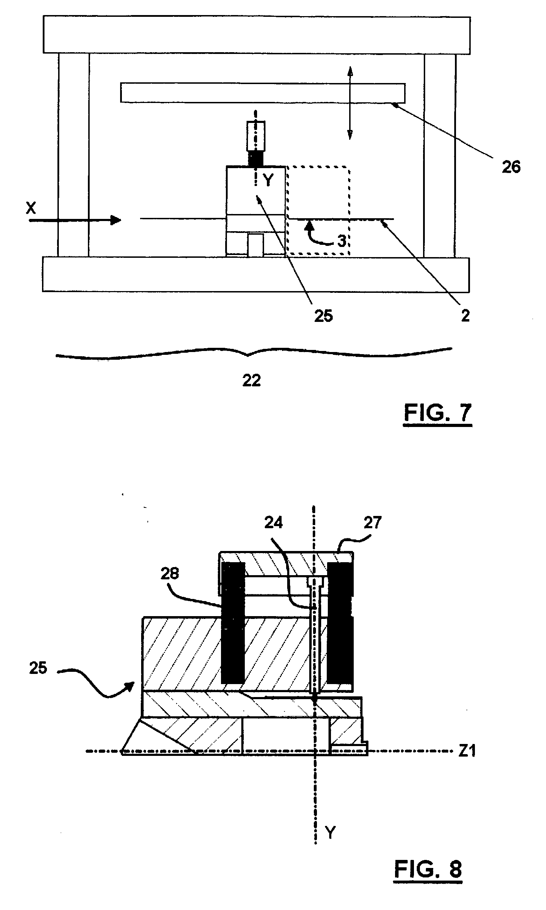

Downstream of the device **21** with respect to the advancing direction **X** there is a punching station **22** provided with the punch **24**. The punch **24**, as best seen in Figure 8, is movable along two axes **Y** and **Z1** orthogonal one another and orthogonal to the advancing direction **X** of the foil **2**.

In particular, with reference to Figures 5-8, the punch **24** is housed in a cartridge **25** provided with a specific vertical seat, in practice a through hole. The punch is reciprocally sliding in the Y direction in the seat of the cartridge **25** and the respective movement is opposed by return springs **28**. The punching station **22** is provided with a vertically movable horizontal plate **26**, as indicated by the arrow in figure **7**, to control the lowering of the element **27** of the cartridge the punch is constrained thereto and, accordingly, to bring the punch 2**4** in abutment against the upper surface of the foil **2** to emboss a point in relief **3** on the respective lower surface. The raising of the plate **26** causes the return of the punch **24** in the initial position raised from the foil **2**. Obviously the movement of the punch **24** is synchronized with the advancing movement of the foil **2** as explained above.

The cartridge **25** is further shiftable reciprocally along a horizontal axis **Z1**, orthogonal to the advancing direction **X**, to move the punch **24** and cover the width of the blade **2**. In this regard, the station **22** comprises a motor **M2**. Figure 8 is a cross section of the cartridge **25** considered along a vertical plane containing the **Z** axis.

In a first embodiment the apparatus **20** comprises a second punching station **22**' provided with a cartridge **25**' equivalent to the cartridge **25**, but active on the lower surface of the foil **2** to emboss the alignment points on the respective upper surface. The cartridge **25'** can be placed upstream of the cartridge **25** with respect to the advancing direction of the foil, but preferably it is placed downstream thereof, as shown in Figure 5.

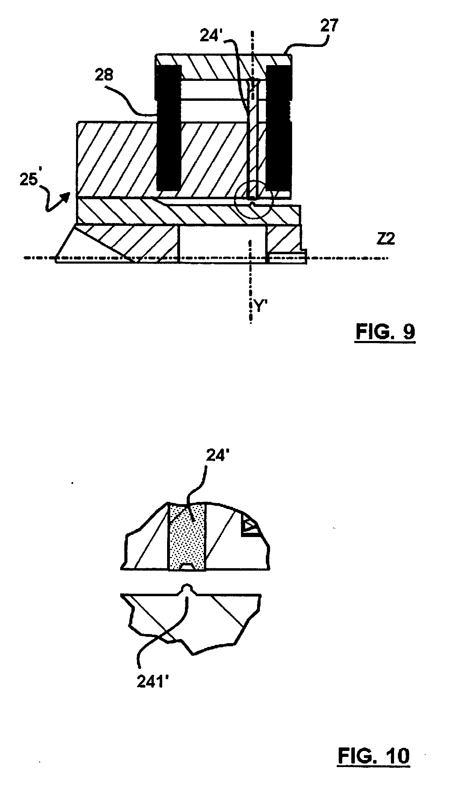

LThe second punching station **22'** is shown in section in Figure 9. Figure 10 is an enlarged section of the second punch **24'** and the corresponding abutment portion 241' of the cartridge **25'**.

The second station **22'** is similar to the first station, and it moves along the axes **Y'** and **Z2** parallel to the axes **Y** and **Z1**, respectively, with the difference that the second punch 2**4'** is female, that is its tip is concave, and the corresponding abutment portion **241'** of the cartridge **25'** is male, that is it is projecting towards the foil **2**, to fit into the tip concavity of the second punch **24'**. The interaction of the punch **24'** and the abutment portion **241'** allows to emboss the points in relief **5-8** in the opposite direction relatively to the points in relief **3** embossed in the first punching station **22**, while maintaining the cartridge **25'** side by side the cartridge **25**, i.e. at the same side with respect to the foil **2**.

In the shown embodiment, the second punching station is translationally operated along the axis **Z2** by a corresponding motor **M3**, but preferably the motor **M2** of the first station also controls the operation of the second station.

In an alternative embodiment, not shown, the apparatus **20** comprises means to turning over the foil **2** and feed it back to the punching station **22** with upper and lower surfaces reversed, so that the punch **24** could emboss the alignment points on the surface of the foil **2** opposite to the surface where the points in relief were or will be embossed **3**.

Advantageously the apparatus **2** has a very simple structure and layout and it allows to emboss the alignment points **5-8** in the foil **2** with the same punch **24** the points in relief **3** of the Braille characters are embossed therewith.

Downstream of the punching station **22** the apparatus **20** may include a curvature station of the foil 2 and / or a cutting / shearing station separating defined portions of the machined foil **2** to obtain the male die **1** shown in Figures 1-3.

## Claims

1. Method for producing an interchangeable male die (1) for embossing Braille characters (4) on yielding supports, comprising the steps of:
a) providing a metal foil (2) provided with an upper face (2U) and a lower face (2L);
b) locally deforming said metal foil (2) to form a plurality of first points in relief (3) on one (2U) from the upper face and the lower face of the metal foil (2), said first points in relief (3) defining one or more characters (4) in the Braille alphabet;
c) locally deforming said metal foil (2) to form at least two second points in relief (5-8) on the other (2L) from the upper face and the lower face of the foil, said second points in relief (5-8) being aligned with corresponding receiving seats (5'-8') of an outer male die-holding support (9).

2. Method according to claim 1, wherein said metal foil (2) is rectangular and there are at least three of said second points in relief (5-8), each formed near to a corner of the metal foil (2).

3. Method according to claim 1 or claim 2, wherein said second points in relief (5-8) are formed in an intermediate position between adjacent first points in relief (3).

4. Method according to any one of claims 1-3, wherein said steps b) and c) are carried out by means of at least one punch (24) moveable in abutment against the surface (2U) of the metal foil (2), alternately along a direction (Y) perpendicular to the two upper (2U) and lower (2L) faces.

5. Method according to any one of the previous claims 1-4, wherein said first points in relief (3) and said second points in relief (5-8) have the same geometric characteristics, or else said second points in relief (5-8) have a substantially different diameter and/or height with respect to the diameter/height of said first points in relief (3).

6. Laminar male die (1) for embossing Braille characters (4) on yielding supports, comprising a plurality of first points in relief (3), projecting from a first face (2U) of the laminar male die (1) and defining one or more marks (4) in the Braille alphabet, **characterised in that** it comprises at least two second points in relief (5-8), projecting from a second face (2L) of the laminar male die (1) opposite said first face (2U), wherein said second points in relief (5-8) can be inserted into corresponding receiving seats (5'-8') of an outer support (9) of the laminar male die (1).

7. Laminar male die (1) according to claim 6, comprising one or more of the following characteristics:
d) the foil (2) that forms the body of the male die (1) is rectangular;
e) there are at least three second points in relief (5-8) and they define two perpendicular axes parallel to said foil (2);
f) the first points in relief (3) and the second points in relief (5-8) have the same geometric characteristics or else the second points in relief (5-8) have a different diameter and/or height with respect to the first points in relief (3);
g) each of said second points in relief (5-8) has a substantially conical extension;
h) said foil (2) is flat or curved.

8. Apparatus (20) for producing laminar male dies (1) intended for embossing Braille characters (4) on yielding supports, comprising:
i) a device (21) for advancing a foil (2) along a first direction (X);
1) a first punch (24) able to move perpendicularly with respect to said foil (2), along a second direction (Y), to imprint first points in relief (3) at a first face (2U) of the foil (2),
**characterised in that** it also comprises,
1) a second punch able to move perpendicularly with respect to said foil, along a direction parallel to said second direction, to imprint second points in relief at the second face (2U) of the foil (2) opposite the first face (2U), or alternatively,
m) means for turning over said foil (2) with respect to said first punch (24) to allow said first punch (24) to also imprint second points in relief (5-8) at the second face (2L) of the foil (2).

9. Apparatus (20) according to claim 8, wherein at least one from said first punch (24) and said second punch (24') is able to translate along a third direction (Z1, Z2) perpendicular to said first direction (X) and to said second direction (Y, Y').

10. Apparatus (20) according to claim 8 or claim 9, wherein the advancing movement of said foil (2) is translating, intermittent, and synchronised with the movement of said first punch (24) and/or of said second punch, said foil (2) being stopped when said first punch (24) and/or said second punch go(es) into abutment against the surface of the foil to imprint points in relief (3, 4).

11. Apparatus (20) according to any one of the previous claims 9-10, wherein said first direction (X) lies in a horizontal working plane, said second direction (Y) is perpendicular to the working plane and said third direction (Z) is parallel to the working plane.

12. Machine for producing flat or curved laminar male dies for embossing Braille characters on yielding supports, **characterised in that** it comprises an apparatus (20) according to any one of claims 8-11.

13. Male die-holding support (9) for machines intended for embossing yielding materials, comprising a seat for housing the laminar male die (1) according to any one of claims 6-7, **characterised in that** it comprises at least two seats (5'-8') for receiving the second points in relief (5-8) of said male die (1).

## Patentansprüche

1. Verfahren zur Herstellung einer austauschbaren Patrize (1) zur Prägung von Braille-Zeichen (4) auf nachgiebigen Trägern, umfassend die Schritte:
a) Vorsehen einer Metallfolie (2), die eine obere Fläche (2U) und eine untere Fläche (2L) aufweist;
b) örtliche Verformung der besagten Metallfolie (2) zum Formen einer Vielzahl von ersten Reliefpunkten (3) an einer (2U) der oberen und unteren Fläche der Metallfolie (2), wobei die besagten ersten Reliefpunkte (3) ein oder mehr Zeichen (4) im Braille-Alphabet definieren;
c) örtliche Verformung der besagten Metallfolie (2) zum Formen von mindestens zweiten Reliefpunkten (5-8) an der anderen (2L) der oberen und unteren Fläche der Folie, wobei die besagten zweiten Reliefpunkte (5-8) zu entsprechende Aufnahmesitzen (5'-8') eines äußeren Patrizenhalteträgers (9) ausgerichtet sind.

2. Verfahren nach Anspruch 1, wobei die besagte Metallfolie (2) rechteckig ist und mindestens drei der besagten zweiten Reliefpunkte (5-8) vorgesehen sind und jeder nahe bei einer Ecke der Metallfolie (2) geformt ist.

3. Verfahren nach Anspruch 1 oder 2, wobei die besagten Reliefpunkte (5-8) in einer Zwischenposition zwischen benachbarten ersten Reliefpunkten (3) geformt sind.

4. Verfahren nach einem der Ansprüche 1 bis 3, wobei die besagten Schritte b) und c) durch mindestens einen Stempel (24) ausgeführt werden, der alternierend längs einer senkrecht zu der oberen (2U) und der unteren (2L) Fläche verlaufenden Richtung (Y) gegen die Fläche (2U) der Metallfolie (2) auf Anschlag verstellbar ist.

5. Verfahren nach einem der vorhergehenden Ansprüche 1 bis 4, wobei die besagten ersten Reliefpunkte (3) und die besagten zweiten Reliefpunkte (5-8) die selben geometrischen Merkmale aufweisen, oder die besagten zweiten Reliefpunkte (5-8) im Wesentlichen einen unterschiedlichen Durchmesser und/oder eine unterschiedliche Höhe bezüglich des Durchmessers/der Höhe der besagten ersten Reliefpunkte (3) besitzen.

6. Lamellenförmige Patrize (1) zur Prägung von Braille-Zeichen (4) auf nachgiebigen Trägern, umfassend einer Vielzahl von ersten Reliefpunkten (3), die von einer ersten Fläche (2U) der lamellenrörmigen Patrize (1) hervorragen und ein oder mehr Muster (4) im Braille-Alphabet definieren, **dadurch gekennzeichnet, dass** sie mindestens zwei zweite Reliefpunkte (5-8) aufweist, die von einer zweiten, zur besagten ersten Fläche (2U) gegenüberliegenden Fläche (2L) der lamellenförmigen Patrize (1) hervorragen, wobei die besagten zweiten Reliefpunkte (5-8) in entsprechende Aufnahmesitze (5'-8') eines äußeren Trägers (9) der lamellenförmigen Patrize (1) eingeführt werden können.

7. Lamellenfdrmige Patrize (1) nach Anspruch 6, mit einem oder mehreren der folgenden Merkmale:
d) die den Körper der Patrize (1) formende Folie (2) ist rechteckig;
e) es gibt mindestens drei zweite Reliefpunkte (5-8) und sie definieren zwei senkrechte, parallel zur besagten Folie (2) verlaufende Achsen;
f) die ersten Reliefpunkte (3) und die zweiten Reliefpunkte (5-8) weisen dieselben geometrischen Merkmale auf oder die zweiten Reliefpunkte (5-8) haben im Wesentlichen einen unterschiedlichen Durchmesser und/oder eine unterschiedliche Höhe bezüglich der ersten Reliefpunkte (3);
g) jeder der besagten Reliefpunkte (5-8) weist einen im Wesentlichen konischen Verlauf auf;
h) die besagte Folie (2) ist flach oder gebogen.

8. Vorrichtung (20) zur Herstellung von lamellenförmigen Patrizen (1) zur Prägung von Braille-Zeichen (4) auf nachgiebigen Trägern, umfassend:
i) eine Vorrichtung (21) zum Vorschub einer Folie (2) entlang einer ersten Richtung (X);
l) einen ersten senkrecht zur besagten Folie (2) entlang einer zweiten Richtung (Y) verstellbaren Stempel (24) zur Prägung von ersten Reliefpunkten (3) an einer ersten Fläche (2U) der Folie (2),
**dadurch gekennzeichnet, dass** sie außerdem
l) einen zweiten senkrecht zur besagten Folie entlang einer zur besagten zweiten Richtung parallelen Richtung verstellbaren Stempel umfasst, zur Prägung von zweiten Reliefpunkten an der zweiten zur ersten Fläche (2U) gegenüberliegenden Fläche (2U) der Folie (2), oder alternativ
m) Mittel zum Wenden der besagten Folie (2) bezüglich des besagten ersten Stempels (24) umfasst, um zu erlauben, dass der besagte erste Stempel (24) auch zweite Reliefpunkte (5-8) an der zweiten Fläche (2L) der Folie (2) prägen kann.

9. Vorrichtung (20) nach Anspruch 8, wobei mindestens einer der besagten ersten (24) und zweiten (24') Stempel entlang einer dritten Richtung (Z1, Z2) senkrecht zur besagten ersten Richtung (X) und zur besagten zweiten Richtung (Y, Y') verfahrbar ist.

10. Vorrichtung (20) nach Anspruch 8 oder Anspruch 9, wobei die Vorschubbewegung der besagten Folie (2) translatorisch, intermittierend und synchron mit der Bewegung des besagten ersten Stempels (24) und/oder des besagten zweiten Stempels erfolgt, wobei die besagte Folie (2) gestoppt wird, wenn der besagte erste Stempel (24) und/oder der besagte zweite Stempel an die Fläche der Folie auf Anschlag liegt, um Reliefpunkte (3, 4) zu prägen.

11. Vorrichtung (20) nach einem der vorangehenden Ansprüche 9 bis 10, wobei die besagte erste Richtung (X) auf einer horizontalen Arbeitsebene, die besagte zweite Richtung (Y) senkrecht zur Arbeitsebene und die besagte dritte Richtung (Z) parallel zur Arbeitsebene liegt.

12. Maschine zur Herstellung von ebenen oder gebogenen lamellenförmigen Patrizen zur Prägung von Braille-Zeichen auf nachgiebigen Träge, **dadurch gekennzeichnet, dass** sie eine Vorrichtung (20) nach einem der Ansprüche 8 bis 11 umfasst.

13. Patrizenhalteträger (9) für Maschinen, die zur Prägung von nachgiebigen Materialien vorgesehen sind, umfassend einen Sitz zum Aufnehmen der lamellenförmigen Patrize (1) nach einem der Ansprüche 6 bis 7, **dadurch gekennzeichnet, dass** er mindestens zwei Sitze (5'-8') zur Aufnahme der zweiten Reliefpunkte (5-8) der besagten Patrize (1) umfasst.

## Revendications

1. Procédé de fabrication d'une matrice mâle interchangeable (1) pour le gaufrage de caractères Braille (4) sur des supports malléable, comprenant les étapes consistant à:
a) préparer une feuille métallique (2) munie d'une face supérieure (2U) et d'une face inférieure (2L);
b) déformer localement ladite feuille métallique (2) pour former une pluralité de premier points (3) en relief sur une (2U) entre la face supérieure et la face inférieure de la feuille métallique (2), lesdits premiers points (3) en relief définissant un ou plusieurs caractères (4) en alphabet Braille;
c) déformer localement ladite feuille métallique (2) pour former au moins deux deuxièmes points (5-8) en relief sur l'autre (2L) entre la face supérieure et la face inférieure de la feuille, lesdits deuxièmes points en relief (5-8) étant en alignement avec des correspondants sièges de réception (5'-8') d'un support (9) porte-matrice mâle externe.

2. Procédé selon la revendication 1, dans lequel ladite feuille métallique (2) est rectangulaire et lesdits deuxièmes points en relief (5-8) sont au moins trois, chacun formé près d'un coin de la feuille métallique (2).

3. Procédé selon la revendication 1 où la revendication 2, dans lequel lesdits deuxièmes points en relief (5-8) sont formés dans une position intermédiaire entre premiers points (3) adjacents en relief.

4. Procédé selon une quelconque des revendications 1-3, dans lequel lesdites étapes b) et c) sont exécutées au moyen d'au moins un poinçon (24) pouvant se déplacer en butée contre la surface (2U) de la feuille métallique (2), alternativement suivant une direction perpendiculaire (Y) aux deux faces supérieure (2U) et inférieure (2L).

5. Procédé selon une quelconque des revendications précédentes 1-4, dans lequel lesdits premiers points en relief (3) et lesdits deuxièmes points en relief (5-8) ont les mêmes caractéristiques géométriques, ou lesdits deuxièmes points en relief (5-8) ont un diamètre et/ou une hauteur sensiblement différents par rapport au diamètre/hauteur des dits premiers points en relief (3).

6. Matrice laminaire mâle (1) pour le gaufrage de caractères Braille (4) sur des supports malléables, comprenant une pluralité de premiers points en relief (3), saillants d'une première face (2U) de la matrice laminaire mâle (1) et définissant un ou plusieurs marques (4) en alphabet Braille, **caractérisée en ce qu'**elle comprend au moins deux deuxièmes points en relief (5-8), saillants d'une deuxième face (2L) de la matrice laminaire mâle (1) opposée à ladite première face (2U), dans laquelle lesdits deuxièmes points en relief (5-8) peuvent être introduits dans des correspondants sièges de réception (5'-8 ') d'un support (9) externe de la matrice laminaire mâle (1).

7. Matrice laminaire mâle (1) selon la revendication 6, comprenant une ou plusieurs des caractéristiques suivantes:
d) la feuille (2) qui forme le corps de la matrice mâle (1) est rectangulaire;
e) les deuxièmes points en relief (5-8) sont au moins trois et ils définissent deux axes orthogonaux parallèles à ladite feuille (2);
f) les premiers points en relief (3) et les deuxièmes points en relief (5-8) ont les mêmes caractéristiques géométriques, ou les deuxièmes points en relief (5-8) ont un diamètre et/ou une hauteur différents par rapport aux premiers points en relief (3);
g) chacun des dits deuxièmes points en relief (5-8) a un développement fondamentalement conique;
h) ladite feuille (2) est plane ou courbe.

8. Appareil (20) pour produire des matrices laminaires mâles (1) destinées à gaufrer des caractères Braille (4) sur des supports malléables, comprenant:
i) un dispositif (21) pour faire avancer la feuille (2) le long d'une première direction (X);
l) un premier poinçon (24) pouvant se déplacer orthogonalement par rapport à ladite feuille (2), le long d'une deuxième direction (Y), pour imprimer des premiers points en relief(3) au niveau d'une première face (2U) de la feuille (2),
**caractérisé en ce qu'**il comprend, en outre,
l) un second poinçon pouvant se déplacer orthogonalement par rapport à ladite feuille, le long d'une direction parallèle à ladite deuxième direction, pour imprimer deuxièmes points en relief au niveau de la seconde face (2U) de la feuille (2) opposée à la première face (2U), ou alternativement,
m) moyens pour retourner la feuille (2) par rapport audit premier poinçon (24) pour permettre audit premier poinçon (24), d'imprimer aussi deuxièmes points en relief (5-8) au niveau de la seconde face (2L) de la feuille (2).

9. Appareil (20) selon la revendication 8, dans lequel au moins un dudit premier poinçon (24) et dudit deuxième poinçon (24') peut se déplacer en translation le long d'une troisième direction (Z1, Z2), orthogonale à ladite première direction (X) et à ladite deuxième direction (Y, Y').

10. Appareil (20) selon la revendication 8 ou la revendication 9, dans lequel le mouvement d'avancement de ladite feuille (2) est en translation, intermittent, et synchronisé avec le mouvement dudit premier poinçon (24) et/ou dudit second poinçon, ladite feuille (2) étant arrêtée lorsque ledit premier poinçon (24) et/ou ledit second poinçon va (vont) en butée contre la surface de la feuille pour imprimer des points en relief (3, 4).

11. Appareil (20) selon une quelconque des revendications précédentes 9-10, dans lequel ladite première direction (X) se trouve dans un plan de travail horizontal, ladite deuxième direction (Y) est orthogonal au plan de travail et ladite troisième direction (Z) est parallèle au plan de travail.

12. Machine pour la production de matrices laminaires mâles, planes ou courbes, pour gaufrer des caractères Braille sur des supports malléable, **caractérisée en ce qu'**elle comprend un appareil (20) selon l'une quelconque des revendications 8-11

13. Support porte-matrice mâle (9) pour machines destinées à le gaufrage de matériaux malléables, comprenant un logement pour recevoir la matrice laminaire mâle (1) selon l'une quelconque des revendications 6-7, **caractérisé en ce qu'**il comporte au moins deux sièges de réception (5'-8') des seconds points en relief (5-8) de ladite matrice (1).
